# EUROPÄISCHE PATENTSCHRIFT

(11) **EP 1 371 436 B1**
(45) Veröffentlichungstag und Bekanntmachung des Hinweises auf die Patenterteilung: **16.09.2009**
(21) Anmeldenummer: 03011793.1
(22) Anmeldetag: 24.05.2003
(51) Int. Cl.: B23B 31/12

(54) **Bohrfutter**
Drill chuck
Mandrin de perceuse

(30) Priorität: 12.06.2002 DE 10226165
(43) Veröffentlichungstag der Anmeldung: 17.12.2003
(73) Patentinhaber: Röhm GmbH, 89567 Sontheim (DE)
(72) Erfinder: Röhm, Günter Horst, 89567 Sontheim (DE)
(74) Vertreter: Hentrich, Swen

(56) Entgegenhaltungen:
- EP-A- 0 710 518
- US-A- 5 431 420
- US-A- 5 580 197

## Beschreibung

Die Erfindung betrifft ein Bohrfutter, insbesondere zum Schlagbohren, mit einem an eine Bohrspindel anschließbaren Futterkörper, in dem Spannbacken geführt sind, die zum Öffnen und Schließen des Bohrfutters über eine Verzahnung mit einem gegenüber dem Futterkörper drehbar gelagerten, mit einer Spannhülse gekoppelten Gewindering im Eingriff stehen.

Derartige Bohrfutter sind aus der Praxis bekannt und beispielsweise in der EP 0 710 518 B1 beschrieben, die Bohrfutter zeigt, die sich bewährt haben, da diese zusätzlich über eine Verriegelungseinrichtung verfügen, die ein unbeabsichtiges Öffnen des Bohrfutters während des Bohrbetriebes verhindert, dabei aber außerordentlich einfach zu betätigen ist, weil zum Schließen des Bohrfutters lediglich die Drehung der Spannhülse in eine Richtung erforderlich ist, während zum Öffnen des Bohrfutters nur der Drehsinn umgekehrt werden muß. Diese einfache Bedienbarkeit wird erreicht durch eine zwischen dem Gewindering und der Spannhülse angeordnete Zwischenhülse, die eine begrenzte Verdrehbarkeit der Spannhülse gegenüber dem drehfest mit der Zwischenhülse verbundenen Gewindering ermöglicht, wobei diese Verdrehbarkeit dazu ausgenutzt wird, ein Sperrglied einbeziehungsweise auszurücken und so die Verdrehsicherung der Spannhülse gegenüber dem Futterkörper zu bewirken beziehungsweise aufzuheben. Bohrfutter mit derartigen Verriegelungseinrichtungen sind schlüssellos zu betätigen, wobei die Relativdrehung zwischen Futterkörper und Spannhülse zum einen dadurch erreicht werden kann, daß mit dem Futterkörper drehfest eine Griffhülse verbunden ist, mit der der Futterkörper ergriffen wird, während die Spannhülse relativ zum Futterkörper mit der andern Hand verdreht wird. Eine weitere Möglichkeit ist darüberhinaus gegeben durch die bei modernen Bohrmaschinen gehäuft präsente Spindelstopp-Funktion, mit der eine Verdrehung der Bohrspindel unterbunden werden kann, so daß dies dazu genutzt wird, den Futterkörper festzulegen, während die Spannhülse verdreht wird. Bei dieser Ausführungsform ist eine drehfest mit dem Futterkörper verbundene Griffhülse verzichtbar, die aber trotz der damit verbundenen Kosten weiterhin Anwendung findet, um einen Abschluß des Futterinneren bereitzustellen, um einer zu schnellen Verschmutzung vorzubeugen.

Der Erfindung liegt damit die Aufgabe zugrunde, ein Bohrfutter der eingangs genannten Art so auszubilden, daß mittels eines möglichst konstengünstig herzustellenden Bauteils auf einfache Weise bei der Montage des Bohrfutters eine Abdeckung auf dessen der Bohrmaschine zugewandten Seite bereitgestellt wird.

Diese Aufgabe wird bei einem Bohrfutter der eingangs genannten Art dadurch gelöst, daß am axial rückwärtigen, der Bohrspindel zugewandten Ende des Futterkörpers eine axial nach vorne weisende Körperschulter ausgebildet ist, und daß eine Abschlußscheibe mit einer Durchgangsöffnung vorgesehen ist, in der ein radial nach innen weisender Federbund ausgebildet ist.

Mit einem derartigen Bohrfutter ist der Vorteil verbunden, daß in besonders einfacher Weise lediglich durch Aufstecken der Abschlußscheibe auf den Futterkörper die Montage erfolgen kann, die zweckmäßigerweise zum Ende des Zusammenbau des Bohrfutter erfolgt, so daß eine Sicherung gegen Axialverschiebung nach vorn der Abschlußscheibe durch die Spannhülse gewährleistet ist. Aufgrund der Zuordnung des Federbundes zur Abschlußscheibe schnappt der Federbund zwangsweise radial nach innen, sobald der Federbund die Körperschulter überquert, so daß eine Schnappverbindung realisiert ist durch besonders kostengünstig herzustellende Strukturen am Futterkörper und der Abschlußscheibe.

Ganz besonders bevorzugt ist eine Ausführungsform die dadurch gekennzeichnet ist, daß die Körperschulter durch die Wandung einer in Umfangsrichtung des Futterkörpers ausgebildeten Ringnut gebildet ist. Diese Ausführungsform zeichnet sich dadurch aus, daß eine axiale Sicherung der Abschlußscheibe ohne zu Hilfenahme der Spannhülse gewährleistet ist, wobei der maschinelle Aufwand mit der Ausbildung der Ringnut statt einer Körperschulter nicht erhöht ist.

Eine hinsichtlich der Einfachheit ihrer Gestaltung und Herstellung bevorzugte Ausführungsform zeichnet sich dadurch aus, daß der Federbund durch einen in der Abschlußscheibe umlaufenden Ringkanal realisiert ist.

Um dabei die Montage der Abschlußscheibe zu vereinfachen ist vorgesehen, daß die Breite des Ringkanals mindestens der Dicke der Körperschulter entspricht,- so daß um diesen entsprechenden Betrag der Federbund radial nach außen ausweichen kann und ohne Pressspannung hinter die Körperschulter zu führen ist.

Weiterhin ist vorgesehen, daß die Abschlußscheibe drehbar am Futterkörper angeordnet ist. Diese Ausführungsform ist hinsichtlich einer fehlerfreien Bedienung des Bohrfutters besonders geeignet, da die Abschlußscheibe zur Drehsicherung des Futterkörpers ausgelegt ist und kein Drehmoment übertragen soll, so daß der Nutzer durch die Drehbarkeit der Abschlußscheibe gegenüber dem Futterkörper den unmittebaren Hinweis erhält, das andere Hilfsmittel insbesondere die Spindelstopp-Funktion zur Drehsicherung des Futterkörpers zu nutzen ist.

Wenn in der Abschlußscheibe Entstaubungsöffnungen ausgebildet sind, dann ist einer Ansammlung von Bohrstaub innerhalb des Bohrfutters vorgebeugt, wobei insbesondere die Kombination mit der Drehbarkeit der Abschlußscheibe eine Akkumulation von Bohrstaub entgegenwirkt, da auf der Abschlußscheibe abgelagerter Bohrstaub durch die Verdrehung erneut aufgewirbelt wird und zu den Entstaubungsöffnungen zu führen ist.

Im Rahmen der Erfindng ist weiterhin vorgesehen, daß die Abschlußscheibe einen Scheibenbund als Erweiterung zu einer Hülse aufweist, die einer Kapselung der Spannbacken dienen kann, wenn die Spannhülse nicht eine dazu ausreichende Länge aufweist, weil beispielsweise dazu das Gehäuse einer Bohrmaschine vorgesehen ist um die Baulänge der aus der Bohrmaschine und dem Bohrfutter bestehenden Bohrvorrichtung zu verkürzen, so daß die zu einer Hülse erweiterte Abschlußscheibe in diesem Sinne die Funktion des Maschinengehäuses übernehmen kann, wenn die Bohrmaschine nicht ein entsprechend geeignetes Maschinengehäuse aufweist.

Im folgenden wird die Erfindung an einem in der Zeichnung dargestellten Ausführungsbeispiel erläutert; es zeigen:

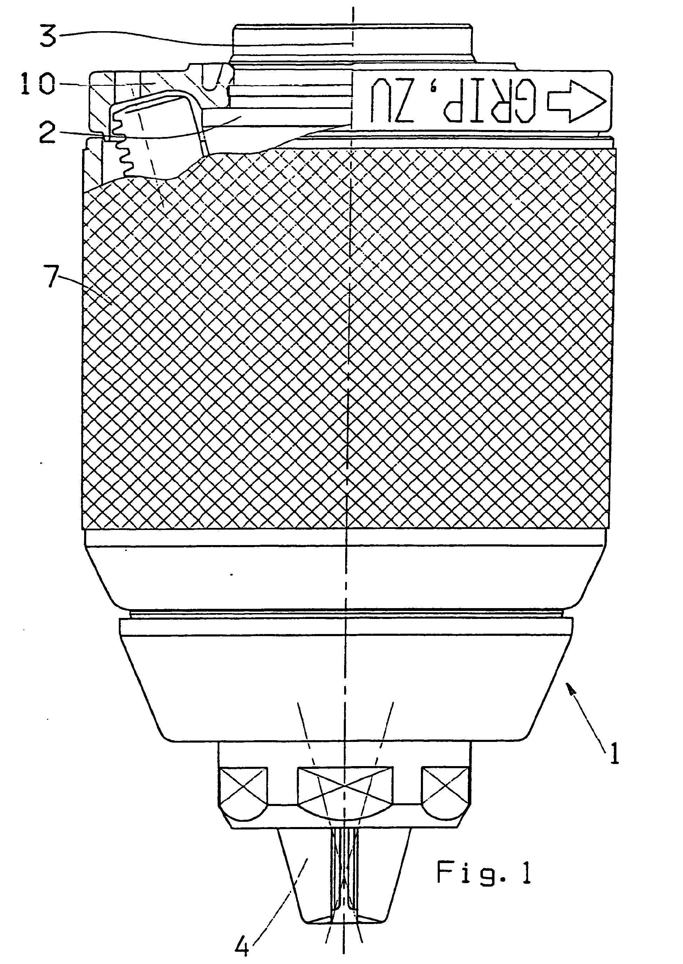

- Fig. 1: eine Seitenansicht eines Bohrfutters, teilweise geschnitten dargestellt und

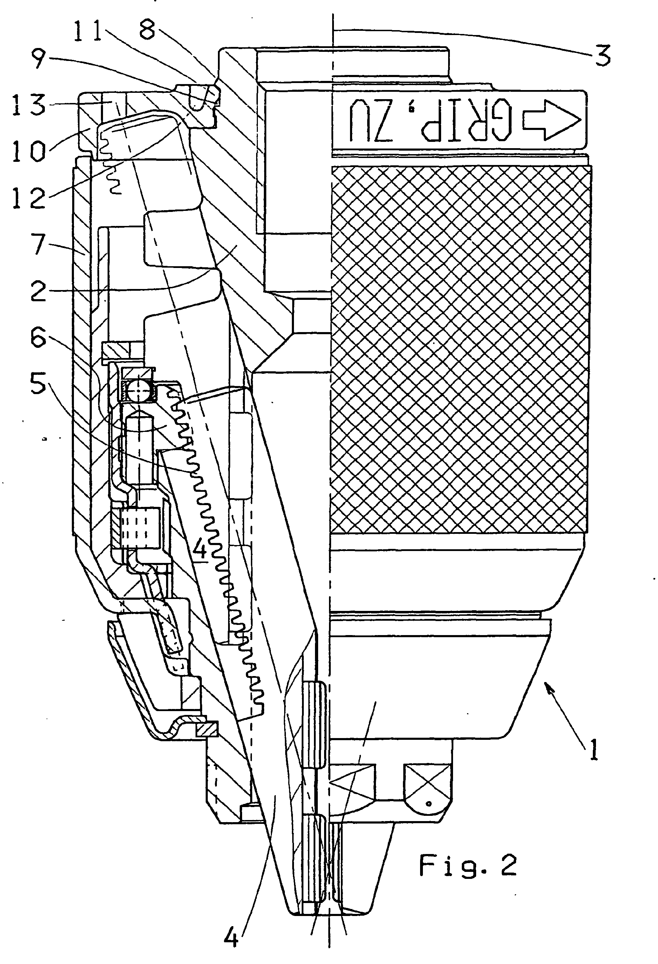

- Fig. 2: eine weitere Seitenansicht eines Bohrfutters mit einer gegenüber Figur 1 erweiterten Freischneidung zum Einblick in das Futterinnere.

In der Zeichnung dargestellt ist ein schlüssellos zu spannendes Bohrfutter 1, das über einen Futterkörper 2 verfügt, an dessen axial rückwärtigem Ende eine Spindelaufnahme ausgebildet ist zum Zusammenwirken mit der nicht dargestellten Bohrspindel einer ebenfalls nicht gezeigten Bohrmaschine. In dem Futterkörper 2 weiterhin ausgebildet ist am axial vorderen Ende eine Werkzeugaufnahme, in die geneigt zur Futterachse 3 verlaufende Führungsaufnahmen für Spannbacken 4 münden, in denen die Spannbacken 4 längsverschieblich geführt sind, die auf ihrer radial nach außen weisenden Seite eine Zahnreihe 5 aufweisen zum Eingreifen in das Innengewinde eines drehbaren am Futterkörper 2 gelagerten Gewinderinges 6, der durch eine drehbar gegenüber dem Futterkörper 2 gelagerte Spannhülse 7 verdreht werden kann.

Am axial rückwärtigen, der Bohrspindel zugewandten Ende des Futterkörpers 2 ist eine axial nach vorne weisende Körperschulter 8 durch die Wandung einer in Umfangsrichtung des Futterkörpers 2 verlaufenden Ringnut 9 ausgebildet. Eine Abschlußscheibe 10 mit einer Durchgangsöffnung, in der ein radial nach innen weisender Federbund 11 ausgebildet ist, kann axial von hinten auf den Futterköper 2 aufgesteckt werden, so daß der Federbund 11 über die Körperschulter 8 rutscht und in die Ringnut 9 eintritt zur Festlegung der Abschlußscheibe 10 am Futterkörper 2. Der Federbund 11 ist in einfacher Weise durch einen in der Abschlußscheibe 10 umlaufenden Ringkanal 12 realisiert, wobei die Breite des Ringkanals 12 mindestens der Dicke der Körperschulter 8 entspricht. Die Abschlußscheibe 10 ist drehbar am Futterkörper 2 angeordnet, wobei weiterhin in der Abschlußscheibe 10 Entstaubungsöffnungen 13 ausgebildet sind.

Nach einer nicht in der Zeichnung dargestellten Ausführungsform besteht weiterhin die Möglichkeit, daß die Abschlußscheibe 13 einen Scheibenbund als Erweiterung zu einer Hülse aufweist.

## Patentansprüche

1. Bohrfutter, insbesondere zum Schlagbohren, mit einem an eine Bohrspindel anschließbaren Futterkörper (2), in dem Spannbacken (4) geführt sind, die zum Öffnen und Schließen des Bohrfutters (1) über eine Verzahnung (5) mit einem gegenüber dem Futterkörper (2) drehbar gelagerten, mit einer Spannhülse (7) gekoppelten Gewindering (6) im Eingriff stehen, **dadurch gekennzeichnet, daß** am axial rückwärtigen, der Bohrspindel zugewandten Ende des Futterkörpers (2) eine axial nach vorne weisende Körperschulter (8) ausgebildet ist, und daß eine Abschlußscheibe (10) mit einer Durchgangsöffnung vorgesehen ist, in der ein radial nach innen weisender Federbund (11) ausgebildet ist.

2. Bohrfutter nach Anspruch 1, **dadurch gekennzeichnet, daß** die Körperschulter (8) durch die Wandung einer in Umfangsrichtung des Futterkörpers (2) ausgebildeten Ringnut (9) gebildet ist.

3. Bohrfutter nach Anspruch 1 oder 2, **dadurch gekennzeichnet, daß** der Federbund (11) durch einen in der Abschlußscheibe (10) umlaufenden Ringkanal (12) realisiert ist.

4. Bohrfutter nach Anspruch 3, **dadurch gekennzeichnet, daß** die Breite des Ringkanals (12) mindestens der Dicke der Körperschulter (8) entspricht.

5. Bohrfutter nach einem der Ansprüche 1 bis 4, **dadurch gekennzeichnet, daß** die Abschlußscheibe (10) drehbar am Futterkörper (2) angeordnet ist.

6. Bohrfutter nach einem der Absprüche 1 bis 5, **dadurch gekennzeichnet, daß** in der Abschlußscheibe (10) Entstaubungsöffnungen (13) ausgebildet sind.

7. Bohrfutter nach einem der Ansprüche 1 bis 6, **dadurch gekennzeichnet, daß** die Abschlußscheibe (10) einen Scheibenbund als Erweiterung zu einer Hülse aufweist.

## Claims

1. A drilling chuck, in particular for hammer drilling, comprising a chuck body (2) which can be connected to a drilling spindle and in which are guided clamping jaws (4) which for opening and closing the drilling chuck (1) are in engagement by way of a tooth arrangement (5) with a screwthreaded ring (6) mounted rotatably with respect to the chuck body (2) and coupled to a clamping sleeve (7), **characterised in that** provided at the axially rearward end of the chuck body (2), that is towards the drilling spindle, is an axially forwardly facing body shoulder (8), and that there is provided a closure disc (10) having a through opening, in which a radially inwardly facing spring collar (11) is provided.

2. A drilling chuck according to claim 1 **characterised in that** the body shoulder (8) is formed by the wall of an annular groove (9) in the peripheral direction of the chuck body (2).

3. A drilling chuck according to claim 1 or claim 2 **characterised in that** the spring collar (11) is embodied by an annular passage (11) peripherally extending in the closure disc (10).

4. A drilling chuck according to claim 3 **characterised in that** the width of the annular passage (12) corresponds at least to the thickness of the body shoulder (8).

5. A drilling chuck according to one of claims 1 to 4 **characterised in that** the closure disc (10) is arranged rotatably on the chuck body (2).

6. A drilling chuck according to one of claims 1 to 5 **characterised in that** dust removal openings (13) are provided in the closure disc (10).

7. A drilling chuck according to one of claims 1 to 6 **characterised in that** the closure disc (10) has a disc collar in the form of an enlargement to afford a sleeve.

## Revendications

1. Mandrin porte-foret, en particulier pour le perçage à percussion, comprenant un corps de mandrin (2) qui peut être relié à une broche de perçage et dans lequel sont guidés des mors de serrage (4) qui, en vue de l'ouverture et de la fermeture du mandrin porte-foret (1), sont en prise, par l'intermédiaire d'une denture (5), avec une bague taraudée (6) qui est mobile en rotation par rapport au corps de mandrin (2) et accouplée à une douille de serrage (7), **caractérisé par le fait que**, à l'extrémité du corps de mandrin (2) qui est située axialement à l'arrière et est tournée vers la broche de perçage, il est prévu un épaulement de corps (8) orienté vers l'avant dans le sens axial, et **par le fait qu'**un disque terminal (10) est pourvu d'une ouverture de passage dans laquelle est façonné un collet élastique (11) tourné radialement vers l'intérieur.

2. Mandrin porte-foret selon la revendication 1, **caractérisé par le fait que** l'épaulement de corps (8) est formé par la paroi d'une gorge annulaire (9) réalisée dans la direction périphérique du corps de mandrin (2).

3. Mandrin porte-foret selon la revendication 1 ou 2, **caractérisé par le fait que** le collet élastique (11) est réalisé par le biais d'un canal annulaire (12) qui s'étend sur la circonférence du disque terminal (10).

4. Mandrin porte-foret selon la revendication 3, **caractérisé par le fait que** la largeur du canal annulaire (12) correspond au moins à l'épaisseur de l'épaulement de corps (8).

5. Mandrin porte-foret selon une des revendications 1 à 4, **caractérisé par le fait que** le disque terminal (10) est monté avec possibilité de rotation sur le corps de mandrin (2).

6. Mandrin porte-foret selon une des revendications 1 à 5, **caractérisé par le fait que** des orifices de dépoussiérage (13) sont réalisés dans le disque terminal (10).

7. Mandrin porte-foret selon une des revendications 1 à 6, **caractérisé par le fait que** le disque terminal (10) présente un collet de disque en tant qu'élargissement pour former une douille.
